Europäisches Patentamt

European Patent Office

Office européen des brevets

(19)

(11) Veröffentlichungsnummer: **0 315 098**
**B1**

(12) EUROPÄISCHE PATENTSCHRIFT

(45) Veröffentlichungstag der Patentschrift: **23.01.91**

(21) Anmeldenummer: **88118081.4**

(22) Anmeldetag: **31.10.88**

(51) Int. Cl.⁵: **F 01 N 5/02,** F 01 N 1/08,
F 02 G 5/02

(54) **Wärmetauscher zur Erwärmung von Flüssigkeiten.**

(30) Priorität: **04.11.87 DE 8714685 u**

(43) Veröffentlichungstag der Anmeldung:
**10.05.89 Patentblatt 89/19**

(45) Bekanntmachung des Hinweises auf die
Patenterteilung:
**23.01.91 Patentblatt 91/04**

(84) Benannte Vertragsstaaten:
**AT CH DE LI NL**

(56) Entgegenhaltungen:
DE-A-3 103 197     FR-A-1 251 475
DE-U-8 714 685     US-A-1 479 714
FR-A- 652 625      US-A-1 706 979
FR-A-1 224 400     US-A-1 709 992

PATENT ABSTRACTS OF JAPAN, Band 6, Nr.
228 (M-171)1106r, 13. November 1982; & JP-A-
57 129 215 (YAMAHA HATSUDOKI K.K.) 11-08-
1982

(73) Patentinhaber: **Färber, Wilfried**
**Talstrasse 4**
**D-7602 Oberkirch-Ringelbach (DE)**

(72) Erfinder: **Färber, Wilfried**
**Talstrasse 4**
**D-7602 Oberkirch-Ringelbach (DE)**

(74) Vertreter: **Zipse & Habersack**
**Lessingstrasse 12**
**D-7570 Baden-Baden (DE)**

(56) Entgegenhaltungen:

PATENT ABSTRACTS OF JAPAN, Band 9, Nr.
330 (M-442)2053r, 25. Dezember 1985; & JP-A-
60 162 006 (SUZUKI JIDOSHA KOGYO K.K.)
23-08-1985

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische
Patent Einspruch einlegen. Der Einspruch ist schriftlich einzureichen und zu begründen. Er gilt erst als eingelegt,
wenn die Einspruchsgebühr entrichtet worden ist (Art. 99(1) Europäisches Patentübereinkommen).

**Beschreibung**

Die Erfindung betrifft einen Wärmetauscher zur Erwärmung von Flüssigkeiten, insbesondere Wasser, mit Abgasen von Brennkraftmaschinen.

Die bisher bekannten Vorrichtungen der genannten Art arbeiten nach dem Prinzip eines Wärmeaustauschers, wobei die Abgase im Wärmeaustauscher an das zu erwärmende Medium abgegeben werden.

In der DE-A-31 03 197 ist ein Wärmetauscher für den Betrieb mit Abgasen von Kolbenmotoren, insbesondere für die Beheizung von Kraftfahrzeugen, mit einem ersten, für ein wärmeaufnehmendes Strömungsmittel bestimmten Strömungsmittelkanal und mit einem zweiten, zwischen einem Einlaß und einem Auslaß verlaufenden, durch eine Wärmetauscherfläche vom ersten Strömungsmittelkanal getrennten Strömungsmittelkanal für das Abgas beschrieben, welcher dadurch gekennzeichnet ist, daß stromab vom Einlaß im zweiten Strömungsmittelkanal eine Stauvorrichtung in Form einer Düsenanordnung angeordnet ist, deren Düsen derart gerichtet sind, daß sie das Abgas längs der Wärmetauscherfläche leiten.

In der US-A-1 706 979 ist eine kombinierte Schalldämpfer/Wärmetauschervorrichtung für Kraftfahrzeuge beschrieben, mit der eine Schalldämpfung und eine Erwärmung von Luft erzielt werden soll.

Der vorliegenden Erfindung liegt die Aufgabe zugrunde, einen Wärmetauscher der eingangs genannten Art zu schaffen, bei dem das an sich bekannte Wärmeaustauscherprinzip verwendet wird, mit dem jedoch gleichzeitig erreicht werden soll, daß eine höchstmögliche Schalldämpfung innerhalb der Gasführung des Wärmeaustauschers erzielt wird.

Zur Lösung der gestellten Aufgabe wird ein Wärmetauscher zur Erwärmung von Flüssigkeiten, insbesondere Wasser, mit Abgasen von Brennkraftmaschinen vorgeschlagen, welcher dadurch gekennzeichnet ist, daß im Inneren eines zylindrischen Doppelmantelrohres, dessen Mäntel einen Zwischenraum für das zu erwärmende Wasser bilden, axial ein auf dem Umfang mit im logarithmischen Längenabstand angeordneten Löchern versehenes, einseitig geschlossenes Rohr angeordnet ist, auf dessen Außenmantel über den Umfang verteilt radial nach außen bis an die innere Wand des Doppelmantelrohres und mit diesem verbundene, sich längs des Rohres erstreckende, wärmeleitende Rippen angeordnet sind, wobei am zylindrischen Doppelmantelrohr an einem Ende stirnseitig ein nur eine Offnung aufweisender Flansch für den Gaseintritt in das Rohr angeordnet ist, und daß am anderen Ende des Doppelmantelrohres ein weiterer Flansch für den Gasaustritt vorgesehen ist.

Mit dem Wärmetauscher gemäß der Erfindung wird der wesentliche Vorteil erreicht, daß durch die Ablenkung und Umkehrung der Gasführung vom inneren, mit Löchern versehenen Rohr über die einzelnen Rippen zum Gasstromausgang hin der Schall gebrochen wird, so daß eine höchstmögliche Schalldämpfung innerhalb der Gasführung erzielt wird.

Vorteilhafte Weiterbildungen der Erfindung sind in den Unteransprüchen beschrieben.

Der Wärmetauscher gemäß Unteranspruch 2 besteht darin, daß zur allflächigen Umströmung im Innenraum des Doppelmantels eine Schraubenwendel vorgesehen ist, durch die das Wasser gezwungen wird, in schraubenförmiger Strömung durch den Innenraum zu fließen. Dadurch wird ein optimaler Wärmeaustausch gewährleistet. Ferner sind gemäß Anspruch 2 in dem Doppelmantel am Gasstromausgang ein Wassereintrittsstutzen und am Gasstromeingang ein Wasseraustrittsstutzen vorgesehen.

Gemäß Anspruch 3 sind zur Erhöhung der schalldämpfenden Wirkung Wirbulatoren in die durch die Rippen gebildeten Kammern eingesetzt.

Mit dem Wärmetauscher gemäß der Erfindung wird der wesentliche Vorteil erreicht, daß neben einer optimalen Wärmeübertragung der Wärme der heißen Gase an das Wasser eine bestmögliche Schalldämpfung erzielt wird, so daß der Wärmetauscher gemäß der Erfindung auch als Schalldämpfer wirkt.

Anhand der Zeichnung soll am Beispiel einer bevorzugten Ausführungsform der Wärmetauscher gemäß der Erfindung näher erläutert werden.

In der Zeichnung zeigt

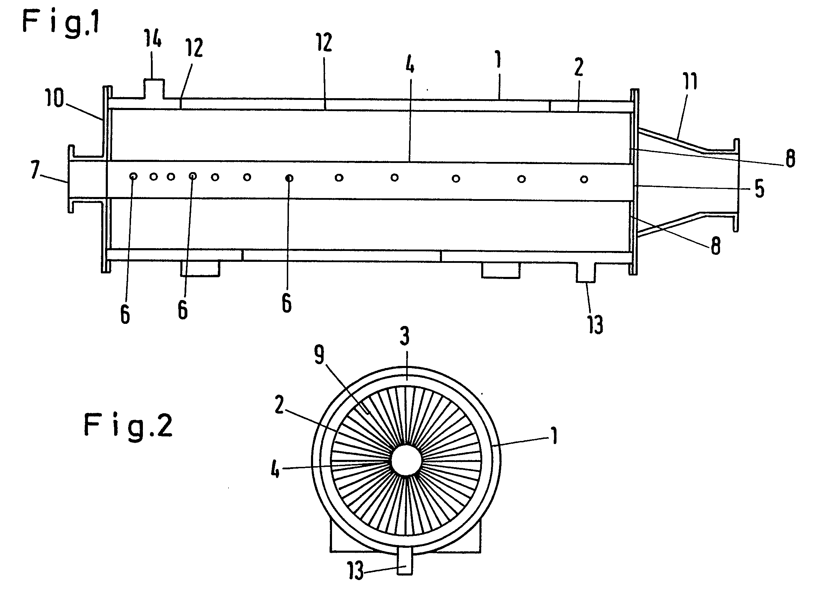

Fig. 1 einen Längsschnitt durch eine Ausführungsform des Wärmetauschers gemäß der Erfindung.

Fig. 2 zeigt einen Querschnitt von Fig. 1.

Wie sich aus der Zeichnung ergibt, besteht der Wärmetauscher zur Erwärmung von Flüssigkeiten, insbesondere Wasser, mit Abgasen von Brennkraftmaschinen gemäß der Erfindung aus einem Rohr mit einem Doppelmantel 1, 2. Die beiden Mäntel 1, 2 bilden einen ringförmigen Zwischenraum 3 für das zu erwärmende Wasser. In das Doppelmantelrohr 1, 2 ist ein Rohr 4 mit wesentlich geringerem Durchmesser axial eingesetzt, das an einem Ende 5 geschlossen wird. Das Rohr 4 weist auf dem gesamten Umfang in logarithmischer Anordnung mehrere Offnungen 6 zum Durchtritt der heißen Gase auf. Die logarithmische Anordnung bedeutet, daß der Abstand der Löcher von der Eingangsseite 7 zur Gasaustrittsseite 8 in logarithmischer Skala abnimmt.

Auf dem Außenmantel des Rohres 4 sind über den Umfang verteilt radial nach außen bis an die innere Wand des inneren Mantels 2 reichende und mit diesem verbundene, gut wärmeleitende Rippen 9 angeordnet. Diese Rippen 9 leiten die Wärme der aus den Löchern 6 austretenden Gase durch die Zwischenräume zum Gasaustritt 8, wobei die Wärme der heißen Gase über die Rippen 9 an die Innenwandung des Innenmantels 2 weitergeleitet wird.

Das Doppelmantelrohr 1, 2 ist an der Gaseintrittseite durch einen Flansch 10 abgeschlossen, der nur eine Offnung für den Durchgang des Rohres 4 aufweist. Am Gasstromausgang ist ein weiterer Flansch 11 vorgesehen, der zur Ableitung der abgekühlten Abgase dient.

Im Zwischenraum des Doppelmantelrohres 1, 2 ist eine schraubenförmige Wendel 12 eingesetzt, wodurch das Wasser schraubenförmig den Zwischenraum durchfließt und somit das Doppelmantelrohr 1, 2 allflächig umströmt. Dadurch wird eine optimale Wärmeaufnahme gewährleistet. Im Bereich des Gasaustrittes 8 ist ein Anschlußstutzen 13 für den Wassereintritt und im Bereich des Gasstromeingangs 7 ein Wasseranschlußstutzen 14 für den Austritt des erwärmten Wassers angeordnet.

Durch die Umkehrung der Gasführung vom Innenrohr 4 durch die Löcher 6 und in die Zwischenräume zwischen den Rippen 9 wird der Schall gebrochen, so daß eine höchstmögliche Schalldämpfung innerhalb der Gasführung erzielt wird. Diese Wirkung kann im Bedarfsfall durch Einsetzen von Vorrichtungen zur Gasverwirbelung in die Kammern zwischen den Rippen 9 erhöht werden.

Als Material zur Herstellung des Wärmetauschers wird vorzugsweise hochtemperaturbeständiger Edelstahl für Temperaturen bis 900°C bei allen gasführenden Teilen verwendet.

Der Wärmetauscher zeichnet sich bei einem geringen Wartungsbedarf durch eine hohe Lebensdauer aus.

## Patentansprüche

1. Wärmetauscher zur Erwärmung von Flüssigkeiten, insbesondere Wasser, mit Abgasen von Brennkraftmaschinen, dadurch gekennzeichnet,

daß im Inneren eines zylindrischen Doppelmantelrohres, dessen Mäntel (1, 2) einen Zwischenraum für das zu erwärmende Wasser bilden axial ein auf dem Umfang mit im logarithmischen Längenabstand angeordneten Löchern (6) versehenes, einseitig geschlossenes Rohr (4) angeordnet ist,

auf dessen Außenmantel über den Umfang verteilt radial nach außen bis an die innere Wand (2) des Doppelmantelrohres und mit diesem verbundene, sich längs des Rohres (4) erstreckende wärmeleitende Rippen (9) angeordnet sind,

wobei am zylindrischen Doppelmantelrohr an einem Ende stirnseitig ein nur eine Öffnung aufweisender Flansch für den Gaseintritt (7) in das Rohr (4) angeordnet ist,

und daß am anderen Ende des Doppelmantelrohres ein weiterer Flansch (11) für den Gasaustritt (8) vorgesehen ist.

2. Wärmetauscher nach Anspruch 1, dadurch gekennzeichnet, daß für eine allflächige Umströmung des Wassers im Zwischenraum (3) zwischen den Wänden (1, 2) des Doppelmantelrohres eine Schraubenwendel (12) angeordnet ist, und daß im Bereich des Gasstromausganges (8) ein Wassereintrittsanschluß (13) und im Bereich des Gasstromeinganges (7) ein Wasseraustrittsanschluß (14) angeordnet ist.

3. Wärmetauscher nach Anspruch 1 und 2, dadurch gekennzeichnet, daß in den durch die Rippen (9) gebildeten Kammern Vorrichtungen zur Gasverwirbelung zur Erhöhung der Schalldämpfung vorgesehen sind.

## Revendications

1. Echangeur de chaleur pour chauffer des liquides, en particulier de l'eau, au moyen des gaz d'échappement de moteurs à combustion interne, caractérisé par le fait qu'à l'intérieur d'un tube cylindrique à double enveloppe dont les enveloppes (1, 2) forment un espace intermédiaire pour l'eau à chauffer, est disposé axialement un tube (4) fermé d'un côté qui est muni sur sa périphérie de trous (6) disposés à des distances en longueur logarithmiques et sur l'enveloppe extérieure de laquelle sont disposées des ailettes conductrices de la chaleur (9) qui sont réparties sur son pourtour, radialement vers l'extérieur, jusqu'à la paroi intérieure (2) du tube à double enveloppe à laquelle elles sont reliées, et qui s'étendent le long du tube (4), une bride ne présentant qu'une seule ouverture étant disposée frontalement sur le tube cylindrique à double enveloppe, à l'une de ses extrémités, pour l'entrée des gaz (7) dans le tube (4), et par le fait qu'une autre bride (11) est prévue à l'autre extrémité du tube à double enveloppe pour la sortie des gaz (8).

2. Echangeur de chaleur selon la revendication 1, caractérisé par le fait que, pour que l'eau s'écoule sur toute la surface dans l'espace intermédiaire (3), une hélice en forme de vis (12) est disposée entre les parois (1, 2) du tube à double enveloppe, et par le fait qu'un raccordement d'entrée de l'eau (13) est disposé dans la région de la sortie (8) du courant de gaz et qu'un raccordement de sortie de l'eau (14) est disposé dans la région de l'entrée (7) du courant de gaz.

3. Echangeur de chaleur selon les revendications 1 et 2, caractérisé par le fait que des dispositifs sont prévus dans les chambres formées par les ailettes (9) pour faire tourbillonner les gaz afin d'augmenter l'isolation phonique.

## Claims

1. Heat exchanger for heating liquids, in particular water, with exhaust gases from internal combustion engines, characterised in that on the inside of a cylindrical double-walled pipe, whose walls (1, 2) form a space for the water to be heated, a pipe (4) is axially arranged, which is closed at one side and is provided on its periphery with holes (6) arranged at logarithmic longitudinal intervals, on the outer wall of which, heat-conducting ribs (9) extending along the length of the pipe (4) are arranged, which are distributed over the periphery radially outwardly as far as the inner wall (2) of the double-walled pipe and connected to the latter, a flange for gas entry (7) into the pipe (4), which flange has only one aperture, is arranged on the cylindrical double-walled pipe on the face of one end thereof, and that on the other end of the double-walled pipe a further flange (11) for the gas exit (8) is provided.

2. Heat exchanger according to claim 1, characterised in that a screw helix (12) is arranged to give a flow of the water over all surfaces in the space (3) between the walls (1, 2) of the double-walled pipe, and that a water inlet connection (13) is arranged in the region of the gas flow outlet (8) and a water outlet connection (14) is arranged in the region of the gas flow inlet (7).

3. Heat exchanger according to claims 1 and 2, characterised in that devices for agitating the gas in order to increase the sound damping are provided in the chamber formed by the ribs (8).

Fig.1

Fig.2

EP 0 315 098 B1